# EUROPÄISCHE PATENTSCHRIFT

(11) **EP 1 551 214 B1**
(45) Veröffentlichungstag und Bekanntmachung des Hinweises auf die Patenterteilung: **18.06.2008**
(21) Anmeldenummer: 03753512.7
(22) Anmeldetag: 07.10.2003
(51) Int. Cl.: A01D 34/16

(54) **MÄHBALKEN**
RECIPROCATING CUTTING BAR
BARRE DE COUPE

(30) Priorität: 08.10.2002 DE 10246867
(43) Veröffentlichungstag der Anmeldung: 13.07.2005
(73) Patentinhaber: Schumacher, Gustav, 57612 Eichelhardt (DE)
(72) Erfinder: SCHUMACHER, Gustav, 57612 Eichelhardt (DE); SCHUMACHER, Friedrich-Wilhelm, 57612 Eichelhardt (DE)
(74) Vertreter: Müller, Thomas Michael
(86) Internationale Anmeldenummer: PCT/EP2003/011046
(87) Internationale Veröffentlichungsnummer: WO 2004/032602

(56) Entgegenhaltungen:
- CH-A- 148 390
- CH-A- 203 074
- DE-C- 673 397
- US-A- 1 583 454

## Beschreibung

Die Erfindung betrifft einen Mähbalken eines Schneidwerks einer Landmaschine gemäß dem Oberbegriff des Anspruchs 1.

Ein solcher Mähbalken ist in der US 1 583 454 gezeigt.

Mähbalken umfassen in der Regel einen Fingerbalken, an dem mehrere Mähfinger angeordnet sind. Relativ zum Fingerbalken ist ein Messer oszillierend geführt, wobei das Messer eine Messerschiene umfasst, an der mehrere Messerklingen befestigt sind. Die Messerklingen bilden Schneiden, die mit Gegenschneiden, die durch die Mähfinger gebildet sind, zusammenarbeiten.

Die Messerklingen haben in der Regel eine dreieckige Grundform. Beim Schnittvorgang wird das Erntegut durch das Hin- und Herbewegen des Messers von den Messerklingen gegen die Mähfinger gedrückt und abgeschnitten. Dabei entsteht ein scherenschnittartiger Schnittvorgang, so dass jede einzelne Messerklinge durch die Schnittbelastung in einer Arbeitsrichtung betrachtet nach hinten gedrückt wird. Damit das Messer in seiner Lage relativ zum Fingerbalken gehalten ist, ist eine abstützende Führung des Messers gegenüber dem Fingerbalken erforderlich. Eine solche Führung zeigt DE 198 50 261 A1. Bei dem dort gezeigten Mähbalken ist an dem Fingerbalken ein Führungsblech befestigt, welches eine Führungsfläche bildet, die in Richtung der Bewegungsrichtung des Messers verläuft und dem Messer zugewandt ist. Das Messer stützt sich in Arbeitsrichtung betrachtet nach hinten mit der Messerschiene gegen die Führungsfläche des Führungsblechs ab. Während die Messerschiene hin und her bewegt wird, ist das Führungsblech starr am Fingerbalken montiert. Das Messer wird in Abhängigkeit der Schnittkraft mehr oder minder stark gegen das Führungsblech gedrückt. Die Schnittkraft kann aufgrund schwer zu schneidenen Erntegutes oder aufgrund stumpfer Messerklingen stark ansteigen, so dass erhöhte Reibkräfte zwischen der Messerschiene und dem Führungsblech wirksam werden. Dies führt insbesondere bei sandigen und korundhaltigen Böden zu einem starken Verschleiß an der Messerschiene und am Führungsblech. Darüber hinaus wird neben der Antriebsenergie, die zum Schneiden des Erntegutes benötigt wird, ein beachtlicher Teil der Antriebsenergie für die oszillierende Bewegung des Messers benötigt. Die erforderliche Antriebsenergie für die Bewegung des Messers ist nicht selten höher als die benötigte Antriebsenergie für den Schneidvorgang.

In der CH 148 390 wird die Reibkraft durch eine Rollenführung reduziert. Die Führungsbleche weisen Ausnehmungen auf, innerhalb welcher unmittelbar auf dem Messerbalken Rollen drehbar befestigt sind. Das Messer stützt sich in Arbeitsrichtung betrachtet nach hinten gegen die Rollen ab und wird durch die Führungsbleche geführt, wobei weiterhin Reibung zwischen dem Messer und den Führungsblechen auftritt. Ähnliche Mähbalken sind in CH 203 074 und DE 673 397 offenbart.

Aufgabe der vorliegenden Erfindung ist es, einen Mähbalken bereitzustellen, der eine hohe Lebensdauer aufweist, ein Anpassen der Abstützung für das Messer ermöglicht und eine stabile Halterung der Rollen und der Rollenhalter gewährleistet.

Die Aufgabe wird erfindungsgemäß durch einen Mähbalken mit den Merkmalen des Anspruches 1 gelöst.

Die Rollenhalter in Forme einer Brücke zwischen jeweils zwei Mähfingern bieten eine stabile Abstützung der Rollen und gewährleisten einen Durchtritt von Schmutz nach hinten, in Längsrichtung und Arbeitsrichtung betrachtet.

Ferner ist kein Reibwiderstand zwischen dem Messer und dem Fingerbalken zu überwinden. Es ist lediglich der Rollwiderstand der Rollen zu überwinden, der deutlich geringer ist. Somit sind erheblich geringere Antriebskräfte erforderlich, um das Messer anzutreiben, so dass kleiner dimensionierte Antriebe verwendet werden können.

Aufgrund des Einsatzes eines Rollenhalters müssen für die Befestigung der Rollen keine gesonderten Befestigungslöcher vorgesehen werden. Vielmehr lässt sich der Rollenhalter an die unterschiedlichen Mähbalken verschiedener Hersteller anpassen. Ferner besteht die Möglichkeit des Nachrüstens bestehender Mähbalken. Ein weiterer Vorteil besteht in der Möglichkeit des Justierens des Rollenhalters in seiner Position gegenüber dem Fingerbalken.

Vorzugsweise ist die Messerschiene gegen die Rollen abgestützt. Daher sind keine zusätzlichen Bauteile erforderlich, die zum Beispiel auf den Messerklingen oder der Messerschiene montiert werden müssen, um eine Abstützung zu gewährleisten.

Das Messer kann ferner vertikal nach unten gegen die Rollen abgestützt sein, um ein Verkippen des Messers gegenüber den Fingerbalken zu vermeiden.

Hierzu können die Messerklingen in Richtung zum Fingerbalken über die Messerschiene überstehen und gegen die Rollen vertikal abgestützt sein. Somit sind auch zur vertikalen Abstützung keine weiteren Bauteile erforderlich.

Alternativ hierzu kann vorgesehen sein, dass zumindest eine Rolle an ihrer Umfangsfläche einen umlaufenden ersten Kragen aufweist, gegen den das Messer vertikal nach unten abgestützt ist.

Darüber hinaus kann vorgesehen sein, dass zumindest eine Rolle an ihrer Umfangsfläche einen umlaufenden zweiten Kragen aufweist, gegen den das Messer vertikal nach oben abgestützt ist.

Durch diese Maßnahmen lässt sich das Messer ebenfalls vertikal abstützen. Zur besseren Selbstreinigung von eingedrungenem Erdmaterial können auch benachbarte Rollen im Wechsel jeweils mit nur einem ersten Kragen oder einem zweiten Kragen versehen sein. Das heißt eine Rolle weist lediglich einen ersten Kragen auf, wobei die nächst benachbarte Rolle nur einen zweiten Kragen aufweist.

Die Rollen können am Fingerbalken jeweils um eine vertikal angeordnete Drehachse drehbar gelagert sein. Hierzu können die Rollen jeweils eine koaxial zur Drehachse verlaufende Lagerbohrung aufweisen, mit der die Rollen jeweils auf einer Außenfläche einer Lagerwelle drehbar gelagert sind und mit dieser eine Gleitlagerung bildet. Dies stellt eine äußerst kostengünstige und robuste Lagerung dar, wobei die Rollen und die Lagerwellen aus hartgesintertem Material hergestellt sein können. Ebenso können zwischen den Rollen und den jeweiligen Lagerwellen Wälzlager vorgesehen sein.

Das radiale Lagerspiel der Gleitlagerung sollte verhältnismäßig groß ausfallen, damit eingedrungener Schmutz und Feuchtigkeit aus der Gleitlagerung entfernt werden kann. Hierzu kann zudem mindestens eine erste Längsnut in der Lagerbohrung der Rolle dienen. Ebenso kann mindestens eine zweite Längsnut in der Außenfläche der Lagerwelle zur Selbstreinigung dienen. Durch die Drehung der Rolle relativ zur Lagerwelle wird somit Dreck von den Oberflächen geschabt und aus der Gleitlagerung transportiert.

Die Lagerwellen können hülsenförmig mit einer zentralen Befestigungsbohrung versehen sein, wobei Befestigungsschrauben zum zumindest mittelbaren Befestigen der Lagerwelle am Fingerbalken durch die Befestigungsbohrungen geführt sind. Als Befestigungsschrauben können sowohl separate Schrauben dienen, die in separaten Bohrungen des Fingerbalkens sitzen, als auch diejenigen Schrauben dienen, mit denen die Mähfinger am Fingerbalken befestigt sind. Rollen können je nach Belastung an jeder Schraube zum Befestigen eines Mähfingers oder lediglich an einigen der Schrauben vorgesehen sein.

Vorzugsweise sind die Mähfinger und die Rollenhalter mittels gemeinsamer Befestigungsschrauben am Fingerbalken befestigt.

Hierbei können die Rollenhalter jeweils mittels zumindest einer Befestigungsschraube eines Mähfingers befestigt sein.

Die Rollenhalter können jedoch auch zwischen zwei benachbart angeordneten Mähfingern angeordnet sein, wobei die Rollenhalter mittels der Befestigungsschrauben der beiden benachbart angeordneten Mähfinger befestigt sind.

Ein bevorzugtes Ausführungsbeispiel wird im folgenden anhand der Zeichnungen näher erläutert.

Hierin zeigt
- Figur 1: eine Draufsicht einer erfindungsgemäßen Ausführungsform eines Mähbalkens und
- Figur 2: einen Längsschnitt des Mähbalkens gemäß Figur 1.

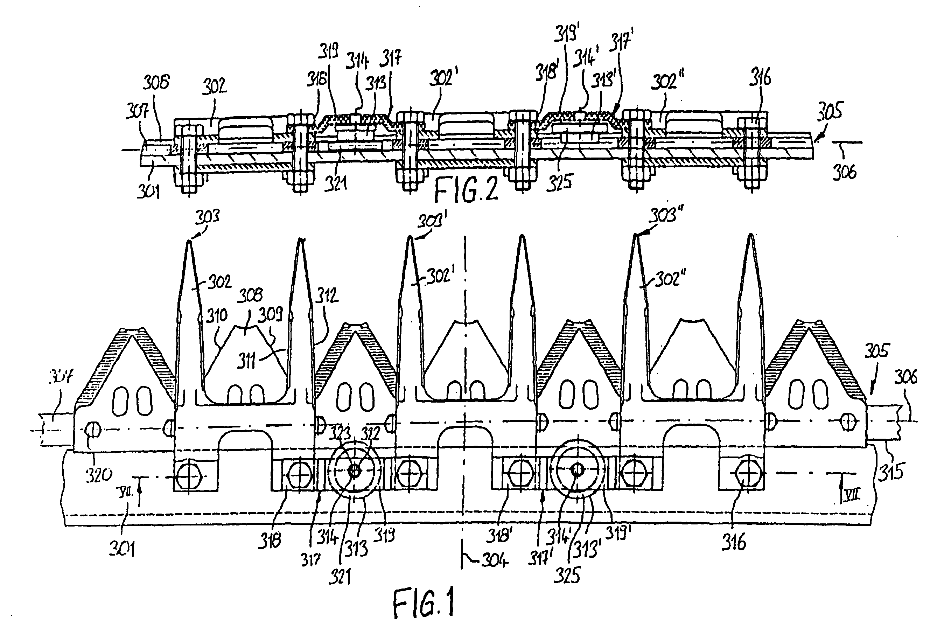

Die Figur 1 zeigt eine erfindungsgemäße Ausführungsform eines Mähbalkens und wird im folgenden beschrieben.

Der Mähbalken umfasst einen Fingerbalken 301, der an einer Landmaschine befestigbar ist. An diesen sind Mähfinger 302 angeordnet, die mit freien Enden 303 in Richtung der Arbeitsrichtung der Landmaschine zeigen und parallel zu einer Längsachse 304 angeordnet sind. Ein Messer 305 ist entlang einer Querachse 306, welche im rechten Winkel zur Längsachse 304 verläuft, oszillierend bewegbar zum Fingerbalken 301 geführt. Das Messer 305 umfasst eine Messerschiene 307 sowie mehrere mit dieser verbundene Messerklingen 308. Die Messerklingen 308 sind in Richtung der Querachse 306 gegeneinander abgestützt. Die Messerklingen 308 bilden jeweils eine erste Schneide 309 und eine zweite Schneide 310. Die ersten Schneiden 309 wirken jeweils zumindest mit einer ersten Gegenschneide 311 eines Mähfingers 302 zusammen. Ebenso arbeiten die zweiten Schneiden 310 jeweils mit zumindest einer zweiten Gegenschneide 312 der Mähfinger 302 zusammen. Die ersten Schneiden 309 und die ersten Gegenschneiden 311 sowie die zweiten Schneiden 310 und die zweiten Gegenschneiden 312 sind jeweils winklig zueinander angeordnet und bilden einen Winkel, der in Arbeitsrichtung betrachtet nach vorne geöffnet ist. Somit ergibt sich bei der oszillierenden Bewegung des Messers 305 eine Schnittbewegung vergleichbar zu der einer Schere, so dass Schnittkräfte in Richtung der Längsachse 304 entgegen der Arbeitsrichtung entstehen.

Zum Abstützen der Schnittkräfte sind Rollen 313 vorgesehen, die jeweils um eine vertikal angeordnete Drehachse 314, welche senkrecht zu der von der Längsachse 304 und der Querachse 306 aufgespannten Ebene angeordnet ist, drehbar gelagert sind. Die Messerschiene 307 stützt sich mit einer Stützfläche 315 nach hinten gegen die Rollen 313 ab. Bei der oszillierenden Bewegung des Messers 305 werden somit die Rollen 313 um die Drehachsen 314 hin und her gedreht, wobei keine Reibkräfte sondern lediglich ein Rollwiderstand zu überwinden ist.

Je Rolle 313 ist ein Rollenhalter 317 in Form einer Brücke vorgesehen, der mit Befestigungsabschnitten 318 am Fingerbalken 301 befestigt ist. Jeder Rollenhalter 317 ist zwischen zwei benachbarten Mähfingern 302, 302', 302" angeordnet, und mit Befestigungsschrauben 316 der benachbarten Mähfinger 302, 302', 302" befestigt. An einem Lagerabschnitt 319 des Rollenhalters 317 sind die Rollen 313 drehbar gelagert.

Die Mähfinger 302 sind vertikal unterhalb des Fingerbalkens 301 angeordnet. In dem Fingerbalken 301 sind Bohrungen vorgesehen, die jeweils mit einer Bohrung in einem der Mähfinger 302 und einer Bohrung des Rollenhalters 317 fluchten. Durch diese Bohrungen ist jeweils eine Befestigungsschraube 316 hindurchgeführt. Aus Stabilitätsgründen können jeweils zwei Mähfinger 302 aus einem Bauteil gefertigt sein und somit einen Doppelfinger bilden, welcher U-förmig gestaltet ist.

Die Messerklingen 308 sind über Schrauben 320 an der Messerschiene 307 befestigt und befinden sich vertikal oberhalb der Messerschiene 307. Die Messerklingen 308 stehen in Richtung zum Fingerbalken 301 nach hinten über die Messerschiene 307 vor und sind vertikal nach unten gegen die Rollen 313 abgestützt. Durch diese Ausgestaltung sind keine weiteren Bauteile zur Abstützung des Messers 305 gegen die Rollen 313 erforderlich.

Ferner weist eine der Rollen einen ersten Kragen 321 auf, gegen den sich die Messerklingen 308 vertikal nach unten abstützen. Eine zu dieser Rolle 313 benachbarte Rolle 313' weist einen zweiten Kragen 325 auf, gegen den sich die Messerklingen 308 vertikal nach oben abstützen. Somit ist eine verbesserte Führung des Messers 305 gewährleistet.

Alternativ dazu können sämtliche Rollen auch jeweils einen ersten Kragen und einen zweiten Kragen aufweisen, so dass die Messerklingen sowohl vertikal nach unten als auch vertikal nach oben gegen jede Rolle abgestützt sind. Die Mähfinger können ferner vertikal unterhalb des Fingerbalkens angeordnet sein, wobei auch die Rollenhalter vertikal unterhalb des Mähfingers angeordnet wären.

### Bezugszeichenliste

- 301: Fingerbalken
- 302: Mähfinger
- 303: freies Ende
- 304: Längsachse
- 305: Messer
- 306: Querachse
- 307: Messerschiene
- 308: Messerklinge
- 309: erste Schneide
- 310: zweite Schneide
- 311: erste Gegenschneide
- 312: zweite Gegenschneide
- 313: Rolle
- 314: Drehachse
- 315: Stützfläche
- 316: Befestigungsschraube
- 317: Rollenhalter
- 318: Befestigungsabschnitt
- 319: Lagerabschnitt
- 320: Schraube
- 321: erster Kragen
- 322: Schraube
- 323: Gewindebohrung
- 325: zweiter Kragen

## Patentansprüche

1. Mähbalken eines Schneidwerks einer Landmaschine umfassend
- eine Längsachse (304), entlang welcher der Mähbalken zum Schneiden von Erntegut in einer Arbeitsrichtung bewegbar ist,
- einen Fingerbalken (301),
- Mähfinger (302), die an dem Fingerbalken (301) befestigt sind und jeweils Gegenschneiden (311, 312) bilden,
- ein Messer (305)
- mit einer Messerschiene (307),
- mit Messerklingen (308), die an der Messerschiene (307) befestigt sind und die jeweils Schneiden (309, 310) aufweisen,
- wobei das Messer (305) entlang einer Querachse (306), welche quer zur Längsachse (304) und horizontal angeordnet ist, relativ zum Fingerbalken (301) oszillierend geführt ist,
- Rollen (313), über die das Messer (305) gegen den Fingerbalken (301) in Arbeitsrichtung betrachtet nach hinten abgestützt ist, wobei die Rollen (313) jeweils an einem Rollenhalter (317) drehbar gelagert sind und die Rollenhalter (317) am Fingerbalken (301) befestigt sind,
**dadurch gekennzeichnet,**
**dass** die Messerschiene (307) gegen die Rollen (313) abgestützt ist und
**dass** die Rollenhalter (317) in Form von Brücken zwischen zwei benachbarten Mähfingern (302, 302', 302") gebildet sind.

2. Mähbalken nach Anspruch 1,
**dadurch gekennzeichnet,**
**dass** das Messer (305) vertikal nach unten gegen die Rollen (313) abgestützt ist.

3. Mähbalken nach Anspruch 2,
**dadurch gekennzeichnet,**
**dass** die Messerklingen (308) in Richtung zum Fingerbalken (301) über die Messerschiene (307) überstehen und gegen die Rollen (313) vertikal abgestützt sind.

4. Mähbalken nach Anspruch 2,
**dadurch gekennzeichnet,**
**dass** zumindest eine Rolle (313) an ihrer Umfangsfläche einen umlaufenden ersten Kragen (321) aufweiset, gegen den das Messer (305) vertikal nach unten abgestützt ist.

5. Mähbalken nach Anspruch 2 oder 4,
**dadurch gekennzeichnet,**
**dass** zumindest eine Rolle (313') an ihrer Umfangsfläche einen umlaufenden zweiten Kragen (325) aufweist, gegen den das Messer (305) vertikal nach oben abgestützt ist.

6. Mähbalken nach einem der Ansprüche 1 bis 5,
**dadurch gekennzeichnet,**
**dass** die Mähfinger (302) und die Rollenhalter (317) mittels gemeinsamer Befestigungsschrauben (316) am Fingerbalken (301) befestigt sind.

7. Mähbalken nach Anspruch 6,
**dadurch gekennzeichnet,**
**dass** die Rollenhalter (317) jeweils mittels zumindest einer Befestigungsschraube (316) eines Mähfingers (302) befestigt ist.

8. Mähbalken nach Anspruch 7,
**dadurch gekennzeichnet,**
**dass** die Rollenhalter (317, 317') jeweils zwischen zwei benachbart angeordneten Mähfingern (301, 301', 301") angeordnet sind und mittels Befestigungsschrauben (316) beider benachbart angeordneter Mähfinger (301, 301', 301 ") befestigt sind.

## Claims

1. A cutting bar of a cutting mechanism of an agricultural machine, comprising
- a longitudinal axis (304) along which the cutting bar is movable in a working direction for the purpose of cutting harvestable material,
- a finger bar (301),
- cutting fingers (302) which are fixed at the finger bar (301) and each form counter cutting edges (311, 312),
- a cutter (305)
with a cutter rail (307),
with cutter blades (308) which are fixed at the cutter rail (307) and which each comprise cutting edges (309, 310),
wherein the cutter (305) is oscillatingly guided relative to the finger bar (301) along a transverse axis (306) which is arranged transversely to the longitudinal axis (304) and horizontally,
rollers (313) via which the cutter (305), if viewed in the working direction, is supported towards the rear against the finger bar (301), wherein the rollers (313) are each rotatably supported on a roller holder (317) which roller holders (317), in turn, are fixed at the finger bar (301),
**characterised in**
**that** the cutter rail (307) is supported against the rollers (313) and
**that** the roller holders (317) are provided in the form of bridges between two adjoining cutting fingers (302, 302', 302").

2. A cutting bar according to claim 1,
**characterised in**
**that** the cutter (305) is supported vertically downwards against the rollers (313).

3. A cutting bar according to claim 2,
**characterised in**
**that** the cutter blades (308) project towards the finger bar (301) beyond the cutter rail (307) and are vertically supported against the rollers (313).

4. A cutting bar according to claim 2,
**characterised in**
**that** at least one roller (313), at its circumferential face, comprises a first collar (321) against which the cutter (305) is vertically downwardly supported.

5. A cutting bar according to claim 2 or 4,
**characterised in**
**that** at least one roller (313'), at its circumferential face, comprises a continuous collar (325) against which the cutter (305) is vertically upwardly supported.

6. A cutting bar according to any one of claims 1 to 5,
**characterised in**
**that** the cutting fingers (302) and the roller holders (317) are secured by common fixing bolts to the finger bar (301).

7. A cutting bar according to claim 6,
**characterised in**
**that** the roller holders (317) are each secured by at least one fixing bolt (316) of a cutting finger (302).

8. A cutting bar according to claim 7,
**characterised in**
**that** the roller holders (317, 317') are each arranged between two adjoining cutting fingers (301, 301', 301") and secured by fixing bolts (316) of two adjoining cutting fingers (301, 301', 301").

## Revendications

1. Barre de coupe d'un mécanisme de coupe dans une machine agricole, comprenant :
- un axe longitudinal (304) le long duquel la barre de coupe est déplaçable pour couper un produit à récolter dans une direction de travail,
- une poutre à doigts (301),
- des doigts de coupe (302), qui sont fixés sur la poutre à doigts (301) et qui forment respectivement des tranchants antagonistes (311, 312),
- un couteau (305) :
-- avec un rail de couteau (307),
-- avec des lames de couteau (308) qui sont fixées sur le rail de couteau (307) et qui présentent respectivement des tranchants (309, 310),
-- le couteau (305) étant guidé en oscillations par rapport à la poutre à doigts (301) le long d'un axe transversal (306), celui-ci étant disposé transversalement à l'axe longitudinal (304) et horizontalement,
- des galets (313) via lesquels le couteau (305) est soutenu contre la poutre à doigts (301) vers l'arrière, considérée en direction de travail, lesdits galets (313) étant montés en rotation respectivement sur un porte-galet (317) et les portes-galets (317) étant fixés sur la poutre à doigts (301),
**caractérisée en ce que**
le rail de couteau (307) est soutenu contre les galets (313), et
les portes-galets (317) sont réalisés sous la forme de pontets entre deux doigts de coupe voisins (302, 302', 302").

2. Barre de coupe selon la revendication 1
**caractérisée en ce que** le couteau (305) est soutenu verticalement vers le bas contre les galets (313).

3. Barre de coupe selon la revendication 2,
**caractérisée en ce que** les lames de couteau (308) dépassent au-delà du rail de couteau (307) en direction de la poutre à doigts (301) et sont soutenues verticalement contre les galets (313).

4. Barre de coupe selon la revendication 2,
**caractérisée en ce qu'**au moins un galet (313) comporte à sa surface périphérique un premier collet périphérique (321) contre lequel s'appuie le couteau (305) verticalement vers le bas.

5. Barre de coupe selon la revendication 2 ou 4,
**caractérisée en ce qu'**au moins un galet (313') comporte à sa surface périphérique un second collet périphérique (325) contre lequel s'appuie le couteau (305) verticalement vers le haut.

6. Barre de coupe selon l'une des revendications 1 à 5,
**caractérisée en ce que** les doigts de coupe (302) et les porte-galets (317) sont fixés sur la poutre à doigts (301) au moyen de vis de fixation communes (316).

7. Barre de coupe selon la revendication 6,
**caractérisée en ce que** les porte-galets (317) sont fixés respectivement au moyen d'au moins une vis de fixation (316) d'un doigt de coupe (302).

8. Barre de coupe selon la revendication 7,
**caractérisée en ce que** les porte-galets (317, 317') sont agencés respectivement entre deux doigts de coupe (301, 301', 301") agencés adjacents, et sont fixés au moyen de vis de fixation (316) des deux doigts de coupe (301, 301', 301") agencés adjacents.
